(19) **Europäisches Patentamt / European Patent Office / Office européen des brevets**

(11) **EP 4 624 653 A1**

(12) **EUROPEAN PATENT APPLICATION**
published in accordance with Art. 153(4) EPC

(43) Date of publication:
01.10.2025 Bulletin 2025/40

(21) Application number: 24866598.6

(22) Date of filing: 25.06.2024

(51) International Patent Classification (IPC):
$D06M\ 15/11$ (2006.01)  $D06B\ 19/00$ (2006.01)
$D06M\ 13/224$ (2006.01)

(86) International application number:
PCT/JP2024/023050

(87) International publication number:
WO 2025/169511 (14.08.2025 Gazette 2025/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.02.2024 JP 2024016120

(71) Applicants:
• Izawa Towel Co., Ltd.
  Shibuya-Ku, Tokyo 1500021 (JP)
• National University Corporation
  Kyoto Institute of Technology
  Sakyo-ku
  Kyoto-shi, Kyoto 606-8585 (JP)
• SUSTAINA TECH Co., Ltd.
  Fukui 9108507 (JP)
• University of Fukui
  Fukui-shi, Fukui 910-8507 (JP)
• Fukui Prefectural Government
  Fukui-shi
  Fukui 910-8580 (JP)

(72) Inventors:
• IZAWA, Shoji
  Tokyo 1500021 (JP)
• OKUBAYASHI Satoko
  Kyoto-shi, Kyoto 6068585 (JP)
• HORI Teruo
  Fukui-shi, Fukui 9108507 (JP)
• HIROGAKI Kazumasa
  Fukui-shi, Fukui 9108507 (JP)
• KAERIYAMA Chihiro
  Fukui-shi, Fukui 9100102 (JP)
• IYO Hirofumi
  Fukui-shi, Fukui 9100102 (JP)

(74) Representative: Mewburn Ellis LLP
Aurora Building
Counterslip
Bristol BS1 6BX (GB)

(54) **FIBER PRODUCT INCLUDING SIZING AGENT, SIZING AGENT, METHOD FOR PRODUCING FIBER PRODUCT INCLUDING SIZING AGENT, AND METHOD FOR PRODUCING FIBER PRODUCT**

(57) A fiber product with an adhesive is provided, the adhesive including an alkenyl succinate ester of a starch decomposed product.

[Figure 1]

EP 4 624 653 A1

## Description

## Technical Field

The present invention relates to a fiber product with an adhesive, an adhesive, a method of manufacturing a fiber product with an adhesive, and a method of manufacturing a fiber product.

## Background Art

Generally, a woven fabric such as a cotton product is formed by crossing of warp / weft. Thus, first, formation of a woven fabric begins with division of grey yarns into warps and wefts. The grey yarns divided into the warps and the wefts go through various steps. Finally, the warps and the wefts are put on a weaving machine. The finished woven fabric is inspected, and is fed to a finishing step. Main steps of manufacturing a cotton product are respective steps of spinning, sizing, weaving, desizing / scouring / bleaching, dyeing, and finishing. Among the respective steps, in the steps of sizing, desizing / scouring, and dyeing, a large amount of water is used, and at the same time, a large amount of waste water is discharged. It is regraded that the waste water discharged in manufacturing clothes amounts to 20% of the waste water of the whole world. With environmental load reduction becoming a major issue worldwide, environmentally friendly manufacturing steps for solving such a waste water problem are required.

Among the foregoing steps, the desizing step after weaving affects largely the subsequent dyeing / finishing steps, the quality of the product, and the like. The conventional adhesive (sizing agent) targeted for the treatment in such a desizing step is designed on the premise that desizing is implemented using water.

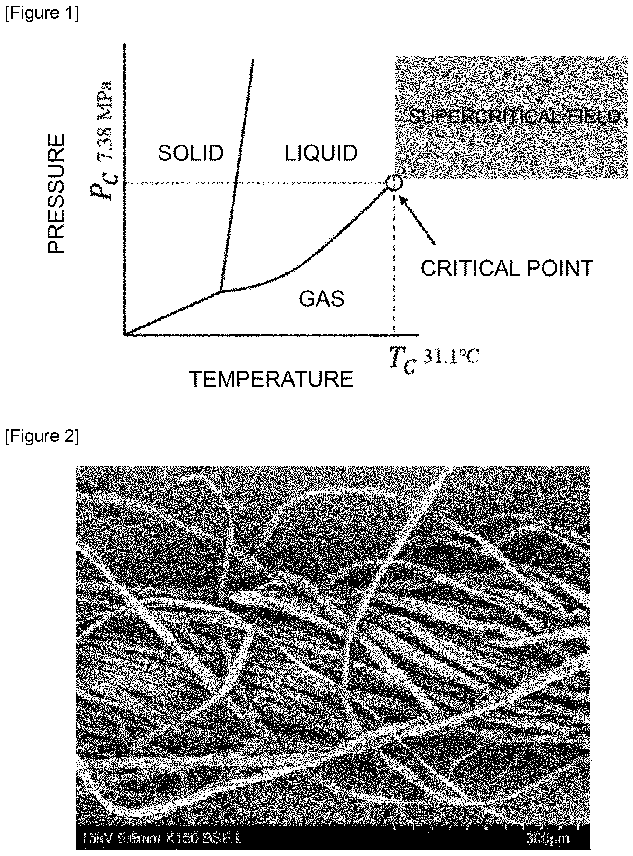

Further, performing fiber processing using supercritical carbon dioxide is known. The supercritical state is exhibited in a state in excess of the critical temperature (Tc) and the critical pressure (Tp) inherent in each compound. This state is referred to as a supercritical fluid, and has an intermediate property between a gas and a liquid. As shown in Figure 1, the supercritical state can be exhibited under conditions as relatively mild as Tc of 31.1°C, and Tp of 7.38 MPa of carbon dioxide, providing advantages of no explosiveness, non-toxicity, high safety, low cost, and easy availability. Further, supercritical carbon dioxide has characteristics of (1) largely varying in density at around the critical temperature when the pressure is slightly changed, (2) having the low viscosity and the high diffusibility, and hence being excellent in transport physical property, and having a large penetration to a substance, (3) having a large thermal conductivity, and a high thermal moving speed, (4) being fast in reaction speed due to the solvation effect, (5) having a smaller dielectric constant than that of water, and has a dielectric constant comparable to that of a general nonpolar organic solvent, and hence becoming a favorable solvent for a nonpolar organic substance, and (5) being capable of collecting and reusing carbon dioxide.

## Summary of Invention

## Technical Problem

The present inventors considered that it is possible to implement an environmentally friendly step of manufacturing a fiber product in which in a desizing step of a fiber product, supercritical carbon dioxide is used as a solvent in place of conventionally used water, thereby solving the waste water problem. As a conventional adhesive to be treated in the desizing step, an adhesive including a starch paste has been conventionally used. However, a diligent study by the present inventors has revealed that an adhesive including a starch paste assumes desizing with use of water, and hence is unsuitable for desizing with use of supercritical carbon dioxide.

As described up to this point, a fiber product with an adhesive suitable for desizing using supercritical carbon dioxide has been desired to be implemented.

It is an object of the present invention to provide a fiber product with an adhesive suitable for desizing with use of supercritical carbon dioxide.

## Solution to Problem

The present inventors conducted a diligent study in order to solve the problem. As a result, the inventors found that use of an adhesive including an alkenyl succinate ester of a starch decomposed product can solve the foregoing problem, and arrived at the present invention.

Specific aspects of the present invention are as follows.

[1] A fiber product with an adhesive, in which
the adhesive includes an alkenyl succinate ester of a starch decomposed product.

[2] The fiber product with an adhesive according to [1], in which the alkenyl succinate ester of the starch decomposed product includes an octenyl succinate ester of dextrin, an octenyl succinate ester of maltose, or a dodecenyl succinate ester of maltose, or a combination thereof.

[3] The fiber product with an adhesive according to [1] or [2], in which an alkenyl succinate content in the alkenyl succinate ester of the starch decomposed product is 5 to 50 wt%.

[4] The fiber product with an adhesive according to any of [1] to [3], in which DE of a starch decomposed product that is a constituent component of the alkenyl succinate ester of the starch decomposed product is 5 to 80.

[5] The fiber product with an adhesive according to any of [1] to [4], in which the fiber product includes a cotton yarn or a cotton cloth.

[6] The fiber product with an adhesive according to any of [1] to [5], in which a deposit rate of the adhesive relative to an amount of the fiber product with an adhesive is 0.1 to 10 wt%.

[7] An adhesive including an alkenyl succinate ester of a starch decomposed product, the adhesive being used for manufacturing the fiber product with an adhesive according to any of [1] to [6].

[8] A method of manufacturing the fiber product with an adhesive according to any of [1] to [6], the method including a step of bringing a fluid including the adhesive and a fiber product into contact with each other, and performing sizing on the fiber product.

[9] A method of manufacturing a fiber product from the fiber product with an adhesive according to any of [1] to [6], the method including a step of: bringing a fluid including supercritical carbon dioxide and the fiber product with an adhesive into contact with each other, and performing desizing of the fiber product with an adhesive.

[10] The method according to [9], in which the step of performing the desizing is by a batch treatment or a continuous treatment.

**Advantageous Effect of Invention**

A fiber product with an adhesive in accordance with one aspect of the present invention is suitable for desizing using supercritical carbon dioxide.

**Brief Description of Drawings**

[Figure 1] Figure 1 is a state view of temperature - pressure of carbon dioxide.

[Figure 2] Figure 2 is a SEM image of a cotton yarn with an adhesive not deposited thereon.

[Figure 3] Figure 3 is a SEM image of a cotton yarn with an alkenyl succinate ester of a starch decomposed product (1) deposited thereon.

[Figure 4] Figure 4 is a SEM image of a cotton yarn with an alkenyl succinate ester of a starch decomposed product (2) deposited thereon.

[Figure 5] Figure 5 is a photograph of a woven fabric cloth before performing a treatment by a fluid including supercritical carbon dioxide.

[Figure 6] Figure 6 is a view showing an outline of a device for use in the treatment by a fluid including supercritical carbon dioxide.

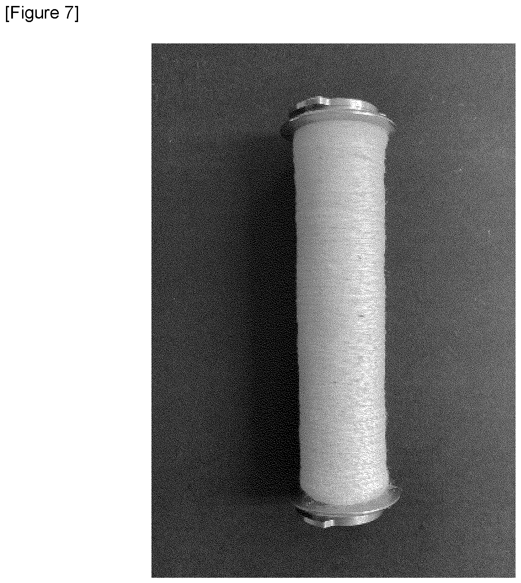

[Figure 7] Figure 7 is a view showing a jig with a cotton yarn wound therearound.

3

**Description of Embodiments**

In the present description, when the numerical value range is expressed using "X to Y", the range is assumed to include the numerical values on both ends thereof.

Below, a description will be given to a fiber product with an adhesive, an adhesive, a method of manufacturing a fiber product with an adhesive, and a method of manufacturing a fiber product.

1. Fiber product with an adhesive

A fiber product with an adhesive in accordance with one aspect of the present invention is:

the fiber product with an adhesive, the adhesive including an alkenyl succinate ester of a starch decomposed product.

The fiber product with an adhesive in accordance with one aspect of the present invention is suitable for desizing using supercritical carbon dioxide.

Further, in some cases, the fiber product with an adhesive of the present embodiment is suitable for desizing using supercritical carbon dioxide, and additionally, has high durability against friction, and/or can exhibit high tensile strength, and/or can exhibit high tensile elongation rate.

Further, conventionally, cellulose acetate may be used as a component of an adhesive. Use of an alkenyl succinate ester of a starch decomposed product as the component of the adhesive in the fiber product with an adhesive of the present embodiment, produces the following effects: as compared with the case using cellulose acetate, water less expensive can be used as a co-solvent, and/or even a small addition amount or deposition amount thereof can sufficiently impart the fiber product with the durability and the tensile strength.

(Adhesive)

The adhesive may further include other components than the alkenyl succinate ester of the starch decomposed product, or may not include other components than the alkenyl succinate ester of the starch decomposed product (the adhesive may include the alkenyl succinate ester of the starch decomposed product). In the present description, "not including" a specific component means that the component is not intentionally added, and does not exclude the aspect including the component as an impurity.

Although the other components than the alkenyl succinate ester of the starch decomposed product has no particular restriction, they can include or can be composed of corn starch, wax, propylene glycol, or polyvinyl alcohol (PVA), or a combination of two or more thereof.

Although the deposit rate (deposition amount) of the adhesive based on the amount of the fiber product with an adhesive has no particular restriction, it is preferably 0.1 to 10 wt%, more preferably 1 to 8 wt%, and most preferably 3 to 8 wt%, and can also be set at 5 to 7.5 wt%. When the deposit rate of the adhesive falls within the numerical value range, pilling is less likely to be caused by friction between yarns or friction between a yarn and a metal, resulting in less yarn breakage. For this reason, the efficiency for weaving is enhanced. The deposition amount of the adhesive based on the amount of the fiber product with an adhesive can be calculated on the basis of the method and the procedure described in (5-1) of 1. of [Example] described later.

Although the adhesive has no particular restriction, it can be configured as the adhesive for a warp of a woven fabric.

(Alkenyl succinate ester of starch decomposed product)

An alkenyl succinate ester of a starch decomposed product is an esterified product of a starch decomposed product and alkenyl succinic acid obtainable by esterification reaction of a starch decomposed product and alkenyl succinic acid. The esterification reaction is the reaction between a part or the whole of the hydroxy group (-OH) of a starch decomposed product and the carboxylic group or carboxylic anhydride group of alkenyl succinic acid. It can be considered that introduction of the structure of alkenyl succinic acid into the molecule of the starch decomposed product increases the hydrophobicity of the molecule.

Although the alkenyl succinate content (wt%) (particularly, the octenyl succinate content (wt%)) in the alkenyl succinate ester of the starch decomposed product has no particular restriction, it is preferably 5 to 50 wt%, more preferably 10 to 40 wt%, and most preferably 20 to 30 wt%. The alkenyl succinate content (wt%) falling within the numerical value range improves the hydrophobicity of the alkenyl succinate ester of the starch decomposed product. The alkenyl succinate content (wt%) can be calculated on the basis of the procedure and the formula described in "D component standard / preservation criteria articles", "starch sodium octenyl succinate", "purity test (2)" (pages 471 and 472) of ninth edition official formulary of food additives (issued by Ministry of Health, Labor and Welfare) as described in [Example] described later.

Although the degree of substitution (DS) of the alkenyl succinate ester group in the alkenyl succinate ester of the starch decomposed product (the average number of the alkenyl succinate ester groups present per glucose ring unit of the alkenyl succinate ester of the starch decomposed product) has no particular restriction, it is preferably 0.05 to 0.7, more preferably 0.1 to 0.5, and most preferably 0.15 to 0.3. The degree of substitution of the alkenyl succinate ester group falling within the numerical value range improves the hydrophobicity of the alkenyl succinate ester of the starch decomposed product, and also improves the solubility to supercritical carbon dioxide.

The molecular weight of the alkenyl succinate ester of the starch decomposed product has no particular restriction, and is preferably 200 to 3000, more preferably 300 to 2000, and most preferably 400 to 1500. The molecular weight falling within the numerical value range improves the solubility of the alkenyl succinate ester of the starch decomposed product to supercritical carbon dioxide. The molecular weight of the alkenyl succinate ester of the starch decomposed product can be calculated on the basis of each molecular weight of the starch decomposed product and the alkenyl succinate that are the raw materials, and the degree of substitution (DS) of the alkenyl succinate ester group as the theoretical value.

The starch decomposed product that is the constituent component of the alkenyl succinate ester of the starch decomposed product results from hydrolysis of starch with an acid, an enzyme, or the like. Although the starch decomposed product in the present embodiment has no particular restriction, it can include, or can be comprised of maltose, dextrin, maltooligosaccharides, maltotriose, glucose, etc., or a combination of two or more thereof. Out of these, maltose or dextrin, or a combination thereof is preferable. Use of maltose or dextrin, or a combination thereof improves the solubility of the alkenyl succinate ester of the starch decomposed product to supercritical carbon dioxide.

As the indicator indicating the degree of decomposition of the starch decomposed product, there is DE (Dextrose equivalent). The DE of the starch decomposed product in the present embodiment has no particular restriction, and is preferably 5 to 80, more preferably 10 to 70, and most preferably 15 to 60. The DE of the starch decomposed product falling within the numerical value range can provide the effect of reducing the molecular weight of the alkenyl succinate ester of the starch decomposed product, and improving the solubility of the ester to supercritical carbon dioxide. The DE of the starch decomposed product can be measured on the basis of the Lehn method or the WS method.

The alkenyl succinic acid that is the constituent component of the alkenyl succinate ester of the starch decomposed product may be in a form of acid anhydride, and may not be in a form of acid anhydride. The number of carbon atoms of the alkenyl group in alkenyl succinic acid has no particular restriction, and is preferably 1 to 30, more preferably 3 to 20, and most preferably 5 to 15.

Although alkenyl succinic acid has no particular restriction, it can include, or can be comprised of octenyl succinic anhydride, decenyl succinic anhydride, dodecenyl succinic anhydride, tetradecenyl succinic anhydride, hexadecenyl succinic anhydride, or octadecenyl succinic anhydride, or a combination of two or more thereof. Out of these, octenyl succinic anhydride, or dodecenyl succinic anhydride, or a combination thereof is preferable. By using octenyl succinic anhydride, or dodecenyl succinic anhydride, or a combination thereof, the hydrophobicity of the alkenyl succinate ester of the starch decomposed product is improved, and the solubility to supercritical carbon dioxide is also improved.

In the alkenyl succinate ester of the starch decomposed product, the starch decomposed product and alkenyl succinic acid that are constituent components can be a given combination of the foregoing starch decomposed products and the foregoing alkenyl succinic acids.

The alkenyl succinate ester of the starch decomposed product can include or can be composed of an octenyl succinate ester of dextrin, an octenyl succinate ester of maltose, or a dodecenyl succinate ester of maltose, or a combination of two or more thereof.

A method of manufacturing an alkenyl succinate ester of a starch decomposed product will be shown below.

A starch decomposed product is dissolved in water alone, or a mixed solvent of water and an organic solvent such as alcohol or acetone. Thereafter, alkenyl succinic anhydride is added thereto, and the mixture is allowed to react with stirring in the presence of a catalyst, and under a condition of a pH of 6 to 8. As a result, an alkenyl succinate ester of a starch decomposed product can be manufactured. As the catalyst, a hydroxide of an alkali metal such as sodium hydroxide, potassium hydroxide, or lithium hydroxide; a carboxylic acid salt of an alkali metal such as sodium carbonate, potassium carbonate, or lithium carbonate; an alkoxide of an alkali metal such as sodium methoxide, sodium ethoxide, or potassium methoxide; ammonia; mono-, di-, or tri-alkylamine having an alkyl group such as methylamine, dimethylamine, trimethylamine ethylamine, diethylamine, triethylamine, propylamine, dipropylamine, butylamine, isobutylamine, secondary butylamine, tertiary butylamine, amylamine, secondary amylamine, tertiary amylamine, or hexylamine; or di- or tri-alcohol amine having an alcohol group such as triethanolamine, triisopropanolamine, or diethanolamine can be used singly alone, or in combination of two or more thereof. The method of manufacturing an alkenyl succinate ester of the starch decomposed product can be carried out on the basis of the method described in, for example, Patent Publication JP-A-H04-273806.

When alkenyl succinic anhydride is used, the alkenyl succinate ester of the starch decomposed product results from the following: alkenyl succinic anhydride undergoes the ring opening reaction by the catalyst, and is ester bonded to the starch decomposed product as a one-side ester. The other carboxylic acid in alkenyl succinic anhydride is rendered in a form of an alkali metal salt or an amine salt due to the catalyst.

For preparing a conventional adhesive including a starch, the starch is required to be heated to high temperatures in order to be dissolved and gelatinized in a solvent. On the other hand, for preparing an adhesive including the alkenyl succinate ester of the starch decomposed product in the present embodiment, the alkenyl succinate ester of the starch decomposed product is dissolved in a solvent even at ordinary temperatures. This provides an advantage of eliminating the necessity of the heating step.

The content of the alkenyl succinate ester of the starch decomposed product in the adhesive can also be set at 100 wt% (the adhesive includes the alkenyl succinate ester of the starch decomposed product). The content of the alkenyl succinate ester of the starch decomposed product in the adhesive can be set at 80 wt% or more, 90 wt% or more, or 95 wt% or more. Further, the content of the alkenyl succinate ester of the starch decomposed product in the adhesive can be set at 100 weight or less. The foregoing numerical value ranges can be arbitrarily combined.

(Fiber product)

Although the fiber product has no particular restriction, mention may be made of a fiber, a yarn, a cloth, or the like. As the fiber, mention may be made of tow before becoming a yarn, or the like. Although the yarn has no particular restriction, mention may be made of a spun yarn, a filament yarn, or a twisted mixed yarn, or a blended yarn obtained by mixing and twisting these, or the like. As the cloth, mention may be made of a woven fabric or a knitted fabric using a yarn, a nonwoven fabric, a felt, or the like. In the present embodiment, a yarn is preferably used as a fiber product. In this case, the yarn provided with the adhesive obtained by the method can be subjected to the subsequent weaving step.

The fiber product can include or can be composed of a cotton yarn or a cotton cloth.

Although the kind of the yarn has no particular restriction, for example, a natural fiber including a vegetable fiber such as cotton or hemp, or an animal fiber such as silk or wool, or a chemical fiber including a synthetic fiber such as polyester or acrylic, a semi-synthetic fiber such as acetate, triacetate, or promix, a regenerated fiber such as rayon, polynosic, cupra, or Lyocell, or an inorganic fiber such as a glass fiber, a metal fiber, or a carbon fiber can be used. The one obtained by blending or mixing and twisting two or more of these yarns is also acceptable. Further, these yarns may be a single yarn, a two ply yarn, a three ply yarn, or the one obtained by twisting 4 or more yarns.

In the present embodiment, from the viewpoint of the feel as a towel, a cotton yarn is preferably used.

Although the kind of the cloth has no particular restriction, it can be set as the same as the kind of the foregoing yarn.

Although a fiber product with an adhesive has no particular restriction, it can be configured as a yarn with an adhesive or a cloth with an adhesive.

Although the yarn with an adhesive has no particular restriction, it can be configured as a warp of a woven fabric.

Although the cloth with an adhesive has no particular restriction, it can be configured as a woven fabric including a warp with an adhesive (with an adhesive deposited thereon) including the alkenyl succinate ester of the starch decomposed product, and a weft with an adhesive including an alkenyl succinate ester of a starch decomposed product not deposited thereon. Herein, the weft with an adhesive including the alkenyl succinate ester of the starch decomposed product not deposited thereon means a weft with the adhesive not positively deposited thereon. Therefore, the weft with the adhesive including the alkenyl succinate ester of the starch decomposed product not deposited thereon can include such an aspect that a warp with an adhesive including the alkenyl succinate ester of the starch decomposed product has come in contact with a weft, and the adhesive of the warp has transferred to the weft. Both of the warp with an adhesive (with an adhesive deposited thereon) including the alkenyl succinate ester of the starch decomposed product, and the weft with an adhesive including the alkenyl succinate ester of the starch decomposed product not deposited thereon can be configured as a cotton yarn.

2. Adhesive

An adhesive in accordance with one aspect of the present invention is an adhesive including an alkenyl succinate ester of the starch decomposed product for manufacturing the fiber product with an adhesive described in the foregoing 1.

In the adhesive of the present embodiment, for respective configurations such as the kind, the content, and the like of the adhesive, the alkenyl succinate ester of the starch decomposed product, the fiber product, and the like, the respective configurations described in the foregoing 1. can be adopted in the same manner.

As described in the foregoing 1., the adhesive can be configured as an adhesive for a warp of a woven fabric.

3. Method for manufacturing a fiber product with an adhesive

A method of manufacturing a fiber product with an adhesive in accordance with one aspect of the present invention is a method of manufacturing the fiber product with an adhesive described in the foregoing 1., the method including a step of bringing a fluid including the adhesive and the fiber product into contact with each other, and performing sizing on the fiber product.

In the method of the present embodiment, for respective configurations such as the kind, the content, and the like of the adhesive, the alkenyl succinate ester of the starch decomposed product, the fiber product, and the like, the respective configurations described in the foregoing 1. can be adopted in the same manner.

In the present embodiment, the treatment conditions for bringing the fluid including the adhesive into contact with the fiber product has no particular restriction. From the viewpoint of improving the sizing property, as the temperature, the range of 0 to 100°C can be adopted, and the range of 0 to 75°C is preferable, and the range of 0 to 55°C is most preferable. Further, from the viewpoint of improving the sizing property, the pressure is preferably 0.01 to 0.2 MPa. Further, from the viewpoint of improving the sizing property, the time is preferably set at a treatment time of about 60 minutes per 450 kg of the fiber product.

The step of bringing the fluid including the adhesive into contact with the fiber product can be configured to be on the basis of the batch treatment.

The amount of the adhesive to be used has no particular restriction. For example, when a cotton yarn is used as a fiber product, from the viewpoint of improving the sizing property, 0.03 to 0.07 g of adhesive is preferably used per gram of the cotton yarn.

Although the content of the alkenyl succinate ester of the starch decomposed product in the fluid including the adhesive has no particular restriction, it is preferably 0.1 to 10 wt%, more preferably 0.5 to 7 wt%, and most preferably 1 to 5 wt%. A content of the alkenyl succinate ester of the starch decomposed product in the fluid falling within the numerical value range results in good permeability to a yarn while minimizing both the concentration and the deposition amount of the adhesive, leading to the improvement of the weaving efficiency.

In the present embodiment, although the fluid including the adhesive has no particular restriction, it can further include a solvent.

Although the solvent has no particular restriction, it can include or can be comprised of water, a glycol ether type solvent, an aqueous solvent such as lower alcohol, glycerin, polyethylene glycol, polypropylene glycol, DMSO, DMF, benzyl alcohol, or N-methyl-2-pyrrolidone, or a combination of two or more thereof. Out of these, water is preferably included. The fluid including water can provide excellent solubility and proper viscosity.

Although the glycol ether type solvent has no particular restriction, it can include or can be comprised of ethylene glycol monobutyl ether (2-butoxyethanol) (EGME), diethylene glycol mono-2-ethyl hexyl ether, ethylene glycol monophenyl ether, 2-methyl pentane-2,4-diol, diethylene glycol monohexyl ether, diethylene glycol dibutyl ether, or triethylene glycol monobutyl ether, or a combination of two or more thereof. Out of these, EGME is preferably included.

Although the lower alcohol has no particular restriction, it can include or can be comprised of methanol or ethanol, or a combination thereof.

Although the content of the solvent in the fluid including the adhesive has no particular restriction, it is preferably 50 to 99 wt%, more preferably 65 to 95 wt%, and most preferably 80 to 95 wt%. When the content of the solvent in the fluid including the adhesive falls within the numerical value range, the solubility of the solid content is improved.

In the present embodiment, when a solvent is used, the solvent can be fed into a treatment container.

When a solvent is used, the proportion (mole) of the solvent per 1 to 5 g of the adhesive has no particular restriction. From the viewpoint of improving the sizing property, the proportion is preferably 1 to 6 mol.

The method of the present embodiment can be used as the sizing step that is one of fiber processing, and further, can be used in combination with each step of spinning, weaving, desizing / scouring / bleaching, dyeing, and finishing that are other fiber processing steps. Further, a method of manufacturing the fiber product with an adhesive of the present embodiment can be also combined with a method of manufacturing a fiber product from a fiber product with an adhesive described later, to be configured as one method or manufacturing method.

The method of the present embodiment can be configured such that the step of performing sizing on the fiber product can include or can be comprised of a step of bringing the fluid including the adhesive and the yarn into contact with each other, and performing sizing on the yarn. Further, in this case, the method of the present embodiment can further include a step of forming a cloth using the yarn with an adhesive, and forming a cloth with an adhesive. Further, in this case, in the method of the present embodiment, the step of forming a cloth with an adhesive can include or can be comprised of a step of forming a woven fabric using the yarn with an adhesive for a warp, and forming a woven fabric with an adhesive.

4. Method for manufacturing fiber product from fiber product with an adhesive

A method of manufacturing a fiber product from a fiber product with an adhesive in accordance with one aspect of the present invention is the method of manufacturing a fiber product from a fiber product with an adhesive described in the foregoing 1. The method includes a step of bringing a fluid including supercritical carbon dioxide and the fiber product with an adhesive into contact with each other, and performing desizing on the fiber product with an adhesive.

The adhesive including an alkenyl succinate ester of a starch decomposed product is used. For this reason, the method of manufacturing a fiber product from a fiber product with an adhesive of the present embodiment can remove the adhesive with efficiency.

In the method of the present embodiment, for respective configurations such as the kind, the content, and the like of the adhesive, alkenyl succinate ester of the starch decomposed product, the fiber product, and the like, the respective configurations described in the foregoing 1. can be adopted in the same manner.

In the present embodiment, from the viewpoint of the feel as a towel, a cotton yarn is preferably used as a fiber.

In the present embodiment, the fiber product with an adhesive has no particular restriction. The one obtained by the method of manufacturing a fiber product with an adhesive of the foregoing 3. can be used.

In the present embodiment, the treatment conditions for bringing the fluid including supercritical carbon dioxide into contact with the fiber product with an adhesive has no particular restriction. From the viewpoint of improving the desizing property, as the temperature, 31 to 150°C or 40 to 120°C can be used, and as the pressure, 8 to 25 MPa or 10 to 25 MPa can be used. Further, as the time, 30 to 800 minutes or 120 to 180 minutes can be used.

In the present embodiment, the step of performing desizing can be on the basis of a batch treatment or a continuous treatment.

In the present embodiment, the fluid including supercritical carbon dioxide may further include a co-solvent. Inclusion of the co-solvent in the fluid can improve the solubility of the adhesive to a solvent (including supercritical carbon dioxide and a co-solvent), and can improve the desizing property.

The co-solvent has no particular restriction. The solvent described in the foregoing 3. can be used. An aqueous solvent or a glycol ether type solvent, or a combination thereof, particularly, water, or EGME, or a combination thereof is preferably used. By using the solvent described in the foregoing 3. as a co-solvent, it is possible to improve the solubility of the adhesive to a solvent (including supercritical carbon dioxide and a co-solvent), and to improve the desizing property. Particularly, when water or EGME, or a combination thereof is used as a co-solvent, the effect is remarkable.

In the present embodiment, when a co-solvent is used, the co-solvent can be fed separately from supercritical carbon dioxide into a treatment container.

In the present embodiment, when the step of performing desizing is configured on the basis of a batch treatment, and a co-solvent is used, the proportion (mol%) of the co-solvent based on the amount of supercritical carbon dioxide has no particular restriction, and is preferably 0.1 to 2 mol% from the viewpoint of improving the solubility of the adhesive to the solvent, and improving the desizing property.

Although the volume ratio of supercritical carbon dioxide and the co-solvent has no particular restriction, it is preferably 400 : 1 to 10 : 1, more preferably 300 : 1 to 25 : 1, and most preferably 200 : 1 to 40 : 1. The volume ratio of supercritical carbon dioxide and the co-solvent can also be set at 150 : 1 to 50 : 1, 100 : 1 to 60 : 1, or 90 : 1 to 70 : 1.

In the present embodiment, when the step of performing desizing is configured on the basis of a continuous treatment, the flow rate of supercritical carbon dioxide to the treatment container has no particular restriction. From the viewpoint of improving the solubility of the adhesive to the solvent, and improving the desizing property, the flow rate is preferably 50 mL to 2000 mL, and more preferably 100 mL to 1500 mL per gram of the fiber.

In the present embodiment, when the step of performing desizing is configured on the basis of a continuous treatment, and a co-solvent is used, the flow rate of the co-solvent to the treatment container has no particular restriction, and is preferably 1 mL to 500 mL, and more preferably 10 mL to 400 mL per gram of the fiber.

Although the removal rate (%) of the adhesive after desizing with the method of the present embodiment has no particular restriction, it can be set at 1 to 99%, or the like. The removal rate (%) of the adhesive can be calculated on the basis of the procedure and the method described in (4-1) of 2. of [Example] described later.

Although the solubility of the adhesive to the fluid including supercritical carbon dioxide in the method of the present embodiment has no particular restriction, it is preferably 0.0001 to 0.01 g/mL, more preferably 0.001 to 0.008 g/mL, and most preferably 0.002 to 0.006 g/mL. Although the solubility of the adhesive to the fluid including supercritical carbon dioxide has no particular restriction, it can be set at $1 \times 10^{-5}$ g/mL or more, $1 \times 10^{-4}$ g/mL or more, or $1 \times 10^{-3}$ g/mL or more. Although the solubility of the adhesive to the fluid including supercritical carbon dioxide has no particular restriction, it can be set at 1 g/mL or less, $1 \times 10^{-1}$ g/mL or less, or $1 \times 10^{-2}$ g/mL or less. The numerical value ranges can be arbitrarily combined. The solubility of the adhesive to the fluid including supercritical carbon dioxide can be calculated on the basis of the procedure and the method described in (4-2) of 2. of [Example] described later.

The method of the present embodiment can be used as the desizing step that is one of fiber processing, and can also be used in combination with each step of spinning, weaving, sizing, scouring / bleaching, dyeing, and finishing that are other steps of fiber processing. Further, a method of manufacturing a fiber product from the fiber product with an adhesive of the present embodiment can also be configured as one method or manufacturing method by being combined with the method of manufacturing a fiber product with an adhesive.

Below, the present invention will be described more specifically by way of Examples. However, the present invention is not limited to the contents described in Examples.

Examples

1. Physical property measurement or observation of surface state of adhesive or fiber product with an adhesive

(1) Preparation of alkenyl succinate ester of the starch decomposed product

[Alkenyl succinate ester of the starch decomposed product (1)]

Into a reactor, water: 500 g and dextrin TK-16 (manufactured by Matsutani Chemical Industry Co., Ltd., DE : 18, powder) (the dextrin is formed of about 5 glucose molecules, and hence the molecular weight of the dextrin can be estimated to be about 900 g/mol from the molecular weight of glucose: about 180 g/mol): 250 g were charged, and the dextrin was dissolved in water under the condition of a temperature of 30°C, resulting in an aqueous solution. While keeping the pH at 7.5 to 8.5 by adding a sodium hydroxide solution with a concentration of 3% to the resulting aqueous solution, octenyl succinic anhydride (RIKACID OSA, manufactured by New Japan Chemical Co., Ltd., liquid): 250 g was added dropwise into the aqueous solution over 1 hour at a temperature of 30°C. Then, at a temperature of 30°C, the mixture was allowed to further react for another 3 hours, resulting in a solution of the reaction product. The resulting solution was subjected to a treatment of vacuum freeze-drying, thereby sufficiently removing the moisture, finally resulting in 550 g of a powder of an octenyl succinate ester of dextrin (which will be hereinafter referred to as "an alkenyl succinate ester of the starch decomposed product (1)".

As for a sample of the resulting alkenyl succinate ester of the starch decomposed product (1) (powder), on the basis of the procedure and the formulae described in "D component standard / preservation criteria articles", "starch sodium octenyl succinate", "purity test (2)" (pages 471 and 472) of ninth edition official formulary of food additives (issued by Ministry of Health, Labor and Welfare), the octenyl succinate content (wt%) in the sample of the alkenyl succinate ester of the starch decomposed product (1) was calculated, and was found to be 25 wt%.

On the basis of the resulting octenyl succinate content (wt%), the degree of substitution (DS) in the alkenyl succinate ester of the starch decomposed product (1) was calculated, and was found to be DS: 0.23. Further, in the case on the basis of the resulting DS value: 0.23, it can be considered that octenyl succinic anhydride (molecular weight: about 210) is bonded in an amount of $0.23 \times 5 = 1.15$ molecules per one molecule of the used dextrin (about 5 glucose molecules). For this reason, the molecular weight (theoretical value) of the alkenyl succinate ester of the starch decomposed product (1) can be calculated to be about 1100.

[Alkenyl succinate ester of the starch decomposed product (2)]

Finally, 550 g of powder of an octenyl succinate ester of maltose (which will be hereinafter referred to as "an alkenyl succinate ester of a starch decomposed product (2)") was obtained in the same manner as with the preparation of the [alkenyl succinate ester of the starch decomposed product (1)], except for using maltose (reagent, purity :99.9%, manufactured by Fuji Film Wako Pure Chemical Industries, Ltd., DE: about 50) (the maltose is formed of about 2 glucose molecules, and hence the molecular weight of the maltose can be estimated to be about 360 g/mol from the molecular weight of glucose: about 180 g/mol): 250 g in place of dextrin TK-16: 250 g.

As for the sample of the resulting alkenyl succinate ester of the starch decomposed product (2) (powder), the octenyl succinate content (wt%) in the sample of the alkenyl succinate ester of the starch decomposed product (2) was calculated in the same manner as with the [alkenyl succinate ester of the starch decomposed product (1)], and was found to be 25 wt%.

On the basis of the resulting octenyl succinate content (wt%), the degree of substitution (DS) in the alkenyl succinate ester of the starch decomposed product (2) was calculated, and was found to be DS: 0.23. Further, in the case on the basis of the resulting DS value: 0.23, it can be considered that octenyl succinic anhydride (molecular weight: about 210) is bonded in an amount of $0.23 \times 2 = 0.46$ molecule per one molecule of the used maltose (about 2 glucose molecules). For this reason, the molecular weight (theoretical value) of the alkenyl succinate ester of the starch decomposed product (2) can be calculated to be about 450.

[Alkenyl succinate ester of the starch decomposed product (3)]

Into a reactor, water: 500 g and maltose (reagent, purity: 99.9%, manufactured by Fuji Film Wako Pure Chemical Industries, Ltd., DE: about 50): 250 g were charged, and the maltose was dissolved in water under the condition of a temperature of 50°C, resulting in an aqueous solution. While keeping the pH at 7.5 to 8.5 by adding a sodium hydroxide solution with a concentration of 3% to the resulting aqueous solution, dodecenyl succinic anhydride (RIKACID DDSA, manufactured by New Japan Chemical Co., Ltd., liquid): 250 g was added dropwise into the aqueous solution over 1 hour at a temperature of 50°C. Then, at a temperature of 50°C, the mixture was allowed to further react for 7 hours, resulting in a solution of the reaction product. The resulting solution was subjected to a treatment of vacuum freeze-drying, thereby sufficiently removing the moisture, finally resulting in 550 g of a powder of a dodecenyl succinate ester of maltose (which will be hereinafter referred to as "an alkenyl succinate ester of the starch decomposed product (3)".

(2) Preparation of aqueous solution including adhesive

[Example 1]

Ordinary temperature water was added to the alkenyl succinate ester of the starch decomposed product (1) to achieve a dilution factor of 20 times based on the weight of the alkenyl succinate ester of the starch decomposed product. The resulting diluted solution was stirred for a given time, thereby preparing an aqueous solution with a solid content concentration of the alkenyl succinate ester of the starch decomposed product (1) of 5.0 wt%.

[Examples 2 and 3]

An aqueous solution with a solid content concentration of the alkenyl succinate ester of the starch decomposed product (2) of 5.0 wt% (Example 2) and an aqueous solution with a solid content concentration of the alkenyl succinate ester of the starch decomposed product (3) of 5.0 wt% (Example 3) were prepared, respectively, in the same manner as in the Example 1, except for using the alkenyl succinate ester of the starch decomposed product (2) or the alkenyl succinate ester of the starch decomposed product (3) in place of the alkenyl succinate ester of the starch decomposed product (1).

[Comparative Example 1]

First, water was placed in a blender. Subsequently, to the water in the blender, wheat starch (Glico Shiranami, manufactured by Matsumoto Yushi Seiyaku Co., Ltd.) and a silicone slide agent (SILICONESTAR HS12, manufactured by NISSIN KAGAKU KENKYUSHO CO., LTD.) were added little by little with sufficient stirring in order to prevent the formation of an aggregate, and respective components were added in the entire amount. After confirming that the wheat starch had been dissolved, a wax (MAKONOL 88, manufactured by Matsumoto Yushi Seiyaku Co., Ltd.) was added little by little with sufficient stirring, and the wax was added in the entire amount, resulting in a mixed solution. The resulting mixed solution was heated under the conditions of at 92°C, for 30 minutes, and at 83°C for 10 minutes, thereby dissolving and gelatinizing the components of wheat starch. As a result, an aqueous solution of a starch paste (the content of the wheat starch: 3.5 g/L, the content of the wax: 2.5 g/L, and the content of the silicone slide agent: 0.5 g/L) was prepared.

(3) Device and reagent

As sizers (sizing machines), a mini-sizer DCI001P (manufactured by KAJI Company) and an HGA-357 type sizer (manufactured in China, adhesive tank bath about 47 L) were prepared.

(4) Operation procedure

[Example 1]

Into the sizer: mini-sizer DCI001P, 2500 mL of the aqueous solution of the alkenyl succinate ester of the starch decomposed product (1) of Example 1 obtained in the foregoing (2) was charged.
Further, a cotton yarn (1) (grey yarn (unbleached yarn, spinning finished yarn, or the like), cotton 100%, 20 count, single yarn, twist mutiplier 4.5, average fiber length about 25 mm) fed from a cheese bobbin, and manufactured by IZAWA TOWEL Co., Ltd. was charged into an aqueous solution of the alkenyl succinate ester of the starch decomposed product (1) in the sizer. Subsequently, the cotton yarn with the adhesive solution (aqueous solution) deposited thereon was passed under imposed loads of 0.04 MPa for a squeezing roll (first passing roll), and 0.06 MPa for an immersion roll (second passing roll). Further, a hot air dry unit at a temperature: 110°C, and with a dry chamber length: about 3.8 m, and an 8 cylinder-rolls dry unit with a diameter of 150 mm at a temperature of 110°C were passed at a speed of 15 m/min, thereby performing a sizing treatment. For each of the cotton yarn (1) fed from the cheese bobbin (before sizing), and the cotton yarn (1) after drying (after sizing) obtained in the foregoing manner, the weight per unit length of the cotton yarn (1) was measured.

[Examples 2 and 3]

A sizing treatment was performed in the same manner as with the sizing treatment of the cotton yarn of Example 1, except for using 2500 mL of an aqueous solution of the alkenyl succinate ester of the starch decomposed product (2) (Example 2) or 2500 mL of an aqueous solution of the alkenyl succinate ester of the starch decomposed product (3) (Example 3) in place of 2500 mL of an aqueous solution of the alkenyl succinate ester of the starch decomposed product (1). Then, for each of Examples 2 and 3, the weight per unit length of the cotton yarn (1) fed from the cheese bobbin, and the weight per unit length of the cotton yarn (1) obtained after the cotton yarn (1) is dried (after sized) were measured in the same manner as in the Example 1

[Comparative Example 1]

Into the sizer: HGA-357 type sizing machine, 35 L of an aqueous solution of a starch paste of Comparative Example 1 obtained in the foregoing (2) was charged.

Further, the cotton yarn (1) manufactured by IZAWA TOWEL Co., Ltd., fed from the cheese bobbin (grey yarn (such as an unbleached yarn or a spinning finished yarn), cotton 100%, 20 count, a single yarn, twist mutiplier 4.5, average fiber length about 25 mm) was charged int an aqueous solution of the starch paste in the sizer. At this step, the weight per unit length of the cotton yarn (1) fed from the cheese bobbin was measured. Subsequently, the cotton yarn with the adhesive solution (aqueous solution) deposited thereon was passed through an about 20-m drying chamber, and was dried at 300°C. Then, excess adhesive was removed by an about 120°C cylinder roll. The resulting cotton yarn (1) after sizing was wound around a weaving beam. The passing speed of the cotton yarn at the drying chamber and the cylinder roll was set at 30 m/min. For the resulting cotton yarn (1) after drying (after sizing), the weight per unit length of the cotton yarn (1) was measured.

(5) Evaluation

Each sizing yarn of Examples 1 to 3 and Comparative Example 1 was subjected to each evaluation of the following (5-1) to (5-3). Each sizing yarn of Examples 1 and 2 was also subjected to the evaluation of the following (5-4) together. Further, the cotton yarn (1) before sizing was subjected to each evaluation of the following (5-2) to (5-4).

(5-1) Deposit rate (deposition amount) of adhesive

For each sizing yarn, using the weight (g) (the weight before the treatment) of the cotton yarn before sizing of the foregoing (4) and the weight (g) (the weight after the treatment) of the cotton yarn after sizing, the deposit rate (deposition amount) (Sizing rate S) of the adhesive was calculated on the basis of the following equation (1).

[Math. 1]

$$\textbf{Sizing rate S (\%)} = \frac{\textbf{Weight after treatment} - \textbf{weight before treatment}}{\textbf{Weight before treatment}} \times 100 \qquad (1)$$

(5-2) Abrasion resistance (number of frictions)

For each sizing yarn, using a cohesion tester (1065, manufactured by MAEDA SEISAKUSHO Co., Ltd.), the abrasion resistance was measured on the basis of JIS L 1095 : 2010 (9.10 abrasion resistance B method). Specifically, an abrasion test was performed on the basis of the following test conditions. The number of frictions until two of 20 samples were cut was measured.

<Test conditions>

·Friction speed: 120 frictions/min

·Friction angle: 110 degrees

·Reciprocating distance: 2.5 cm

·Test length: 20 cm

·Friction element: hard steel wire with a diameter of 0.6 mm

(5-3) Single yarn tensile strength and elongation percentage

For each sizing yarn, using a tensile tester (autograph AG-Xplus, manufactured by SHIMADZU CORPORATION), on the basis of JIS L 1095 : 2010 (9.5 single yarn tensile strength and elongation percentage), under the conditions of a grip interval: 20 cm and a tensile speed: 20 cm/min, the single yarn tensile strength and elongation percentage were measured.

(5-4) Observation by scanning electron microscope

Using a table-top microscope (Miniscope (registered trademark) TM4000 Plus, manufactured by Hitachi High-Tech Inc.), at an acceleration voltage of 15 kV, for the cotton yarns before sizing used in Examples 1 to 3, and the cotton yarns after sizing of Examples 1 and 2, each surface was observed.
The evaluation results of the foregoing (5-1) to (5-3) are shown in Table 1.
Further, the observation results by SEM of the foregoing (5-4) regarding Examples 1 and 2 are shown in Figures 2 to 4. The correspondence of Figures 2 to 4 is as follows.
Figure 2: SEM image of a cotton yarn with the adhesive used in Examples 1 to 3 not deposited thereon (magnification: 150 times)

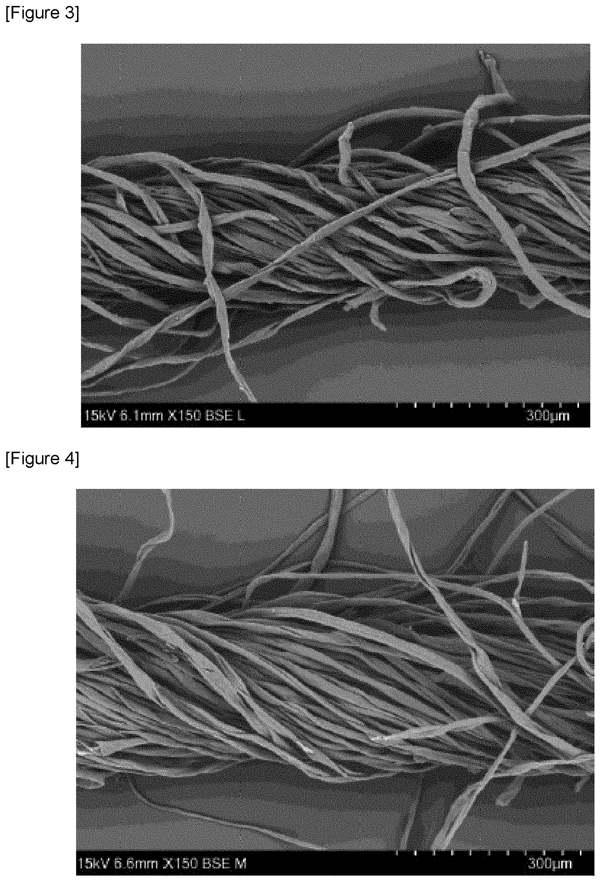

Figure 3: SEM image of the cotton yarn with the alkenyl succinate ester of the starch decomposed product (1) of Example 1 deposited thereon (magnification: 150 times)
Figure 4: SEM image of the cotton yarn with the alkenyl succinate ester of the starch decomposed product (2) of Example 2 deposited thereon (magnification: 150 times)
[Table 1]

Table 1

| | Fiber product with adhesive | | | |
| --- | --- | --- | --- | --- |
| | Deposit rate (wt %) | Number of frictions (frictions) | Single yarn tensile strength (cN) | Elongation percentage (%) |
| Example 1 | 5.2 | 230.2 | 414 | 7.1 |
| Example 2 | 7.1 | 211.9 | 498 | 7.3 |
| Example 3 | 2.9 | 210.0 | 498 | 7.2 |
| Comparative Example 1 | 1.15 | 161.0 | 466 | 4.5 |
| Cotton yarn before sizing (1) | -*1 | 135.3 | 309 | 6.3 |
| * 1 : The deposit rate cannot be calculated because of before sizing. | | | | |

The results of Table 1 indicate that each cotton yarn of Examples 1 to 3 (the cotton yarn with any of the alkenyl succinate esters of the starch decomposed products (1) to (3) deposited thereon) has been improved in all the performances of the number of frictions, the single yarn tensile strength, and elongation percentage, and are excellent in the abrasion resistance, the single yarn tensile strength, and elongation percentage as compared with the cotton yarn before sizing (1).
It has been indicated as follows: although each cotton yarn of Examples 1 to 3 is comparable in all the performances of the number of frictions, the single yarn tensile strength, and elongation percentage to the cotton yarn with the starch paste deposited thereon of Comparative Example 1, it is at the level of no practical problem as a cotton yarn with an adhesive.
Further, the SEM photographs of Figures 3 and 4 indicate as follows; when the alkenyl succinate ester of the starch decomposed product (1) or the alkenyl succinate ester of the starch decomposed product (2) is used as an adhesive, fluff is suppressed, and is entirely fixed by the adhesive.
The results of Table 1 and Figures 2 to 4 indicate that the alkenyl succinate ester of the starch decomposed product in the present invention is excellent in convergence. Further, it is indicated that all of the aqueous solutions including the alkenyl succinate ester of the starch decomposed product (1), (2) or (3) are usable as an adhesive, and it has been revealed that an alkenyl succinate ester of a starch decomposed product is useful as an adhesive regardless of the kind thereof.

2. Desizing using supercritical carbon dioxide

(1) Preparation of cloth or cotton yarn with an adhesive deposited thereon [Cloth with alkenyl succinate ester of the starch decomposed product (1) deposited thereon]

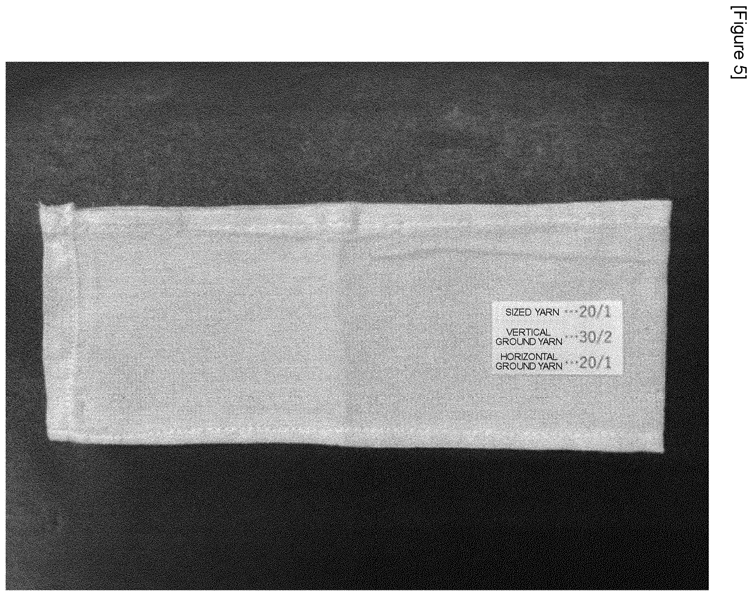

Using the cotton yarn (1) with the alkenyl succinate ester of the starch decomposed product (1) prepared in (4) of the foregoing 1. sized thereon (Example 1, the deposit rate of the adhesive: 5.2 wt% (Table 1)) (20-count single yarn) (used as a pile yarn) and a cotton yarn (TS cotton yarn, manufactured by KB TSUZUKI K.K., 30-count two ply yarn) for warps, and a cotton yarn (TS cotton yarn, manufactured by KB TSUZUKI K.K., a 20-count single yarn) for a weft, respectively, a woven fabric cloth (a warp density of 40 yarns/inch, and a weft density of 45 yarns/inch; in the woven fabric, sized cotton yarn (1): about 30%, the TS cotton yarn of the warp: about 30%, and the TS cotton yarn of the weft: about 40%) was woven by a weaving machine (Itema weaving machine manufactured in Italy). The deposit rate of the adhesive based on the total amount of the woven fabric cloth can be calculated to be 1.6 wt%. The outward appearance of the resulting woven fabric cloth is shown in Figure 5.

[Cotton yarn with starch deposited thereon]

A cotton yarn after sizing (1) was obtained in the same manner as with the operation procedure of [Comparative Example 1] of (4) of the foregoing 1., except for adjusting various operation conditions such as the drying temperature, the removal amount of the adhesive by a cylinder roll, and the passing speed of the cotton yarn so that the deposit rate (deposition amount) of the adhesive (starch) in the finally resulting sizing yarn became 3.8 wt%, and was wound around a weaving beam.

(2) Device and reagent

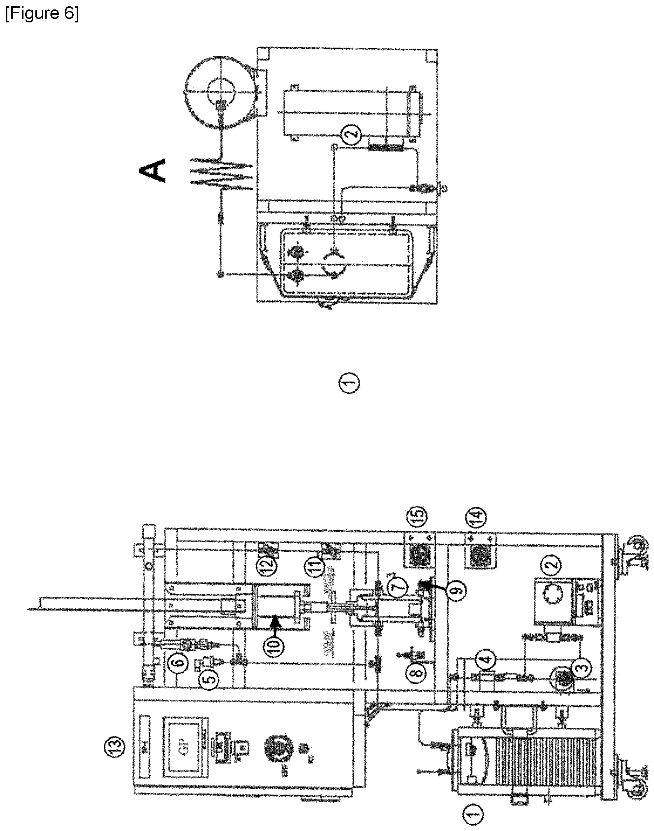

Figure 6 shows the outline of the entire device used in the treatment by a fluid including supercritical carbon dioxide. Respective reference numerals and signs in Figure 6 are as follows. 1: chiller unit, 2: $CO_2$ supply pump, 3: air vent valve, 4: check valve, 5: pressure transmitter, 6: safety valve, 7: dyeing container, 8: container drain valve, 9: container inside temperature sensor, 10: magnetic force induction type stirrer, 11: exhaust gas flow rate adjustment valve, 12: container exhaust valve, 13: control panel, 14: plug for $CO_2$ supply pump, 15: plug for dyeing container heating heater, and A: $CO_2$ tank.

As the chiller unit 1, a cooling water circulation device LTC-450α (manufactured by AS ONE Corporation) was used, as the $CO_2$ supply pump 2, a double plunger pump NP-KX-500 (manufactured by NIHON SEIMITSU KAGAKU CO., LTD.) was used, and as the dyeing container 7, a high pressure container (manufactured by Aitec Co., Ltd., model: C-04-M-FU, contents: 400 mL) was used.

For the carbon dioxide supply source, a liquefied carbon dioxide tank (KIND GAS Co., Ltd., purity 99.5% or more) was used.

(3) Operation procedure

(3-1) Cloth with an adhesive deposited thereon

(3-1-1) Water is used as co-solvent

A jig (a hollow cylindrical shape with a length of 110 cm × an outer diameter of 15 mm, a network structure, made of a metal) was prepared. The cotton yarn (1) with the woven fabric cloth of Example obtained with the (1) [cloth with the alkenyl succinate ester of the starch decomposed product (1) deposited thereon] of the foregoing 2. (using the cotton yarn (1) with the alkenyl succinate ester of the starch decomposed product for a warp) (about 9 cm × about 21 cm, about 10 g) was wound around the jig. A cotton cord was further wound therearound, and fixed in order to prevent the wound cloth from being removed.

Further, an external cylinder (a hollow cylindrical shape with a length of 110 cm, an inside diameter of 36 mm, and an outer diameter of 41 mm) was prepared. A paper wiper (KimWipes (registered trademark), 120 mm × 210 mm) entirely soaked with 2 mL of water that was a co-solvent evenly was wound around the outside of the external cylinder. A cotton cord was further wound therearound and fixed in order to prevent the wound paper wiper from being removed.

The jig with the cloth wound therearound was set and fixed in the inside of the external cylinder with the paper wiper wound therearound, resulting in a measurement sample. The resulting measurement sample was set in the dyeing container 7. Then, using the $CO_2$ supply pump 2, 200 mL of carbon dioxide was fed at a liquid feeding speed of 20 to 300 mL/min to the dyeing container 7, thereby pressurizing the inside of the dyeing container 7. The conditions for subjecting the measurement sample to a treatment by a supercritical carbon dioxide fluid were set at 120°C, 25 MPa, for a time of 180 minutes, and a batch system. For stirring, a propeller was used, and one set was configured to include forward rotation for 60 seconds, and reverse rotation for 60 seconds, and the set was repeated at 900 rpm for 180 minutes. The water soaked into the paper wiper was rendered in a state mixed with supercritical carbon dioxide. The volume ratio of supercritical carbon dioxide : cloth became 40 : 1, and the volume ratio of supercritical carbon dioxide : water became 200 : 1. After the treatment by a supercritical carbon dioxide fluid, for the dyeing container 7, the valve was opened, and the pressure was released to atmospheric pressure. After releasing the pressure in the dyeing container 7, the cloth was taken out from the jig, and was dried under the conditions of for 2 hours and at 105°C, and the cloth after drying was weighed.

(3-1-2) Use of EGME as co-solvent

A measurement sample was prepared in the same manner as with the method of the foregoing (3-1-1), except for using 5 mL of EGME (ethylene glycol monobutyl ether) in place of 2 mL of water as the co-solvent to be soaked into the paper wiper. The treatment of the measurement sample with a supercritical carbon dioxide fluid was performed. Then, the cloth after being taken out from the jig, and being dried was weighed. The EGME soaked into the paper wiper was rendered in a state mixed with supercritical carbon dioxide. The volume ratio of supercritical carbon dioxide: cloth was 40 : 1, and the volume ratio of supercritical carbon dioxide : EGME was 80 : 1.

(3-2) Cotton yarn with alkenyl succinate ester of the starch decomposed product (1) deposited thereon

(3-2-1) Use of 1 mL of water as co-solvent

A measurement sample was prepared in the same manner as with the method of (3-1-1), except for winding the cotton yarn (1) with the alkenyl succinate ester of the starch decomposed product (1) prepared in (4) of the foregoing 1. sized thereon (Example 1, the deposit rate of the adhesive: 5.2 wt% (Table 1)) (length: about 400 m, about 10 g) in place of winding the woven fabric cloth of Example obtained in the (1) [cloth with the alkenyl succinate ester of the starch decomposed product (1) deposited thereon] of the foregoing 2., around the jig, and changing the amount of water of the co-solvent to be soaked into the paper wire from 2 mL to 1 mL. The treatment of the measurement sample by a supercritical carbon dioxide fluid was performed. Then, the cotton yarn after being taken out from the jig, and being dried was weighed. The water soaked into the paper wiper was rendered in a state mixed with supercritical carbon dioxide. The volume ratio of supercritical carbon dioxide : cotton yarn was 40 : 1, and the volume ratio of supercritical carbon dioxide : water was 400 : 1.

(3-2-2) Use of 2 mL of water as co-solvent, treatment time of 360 minutes

A measurement sample was prepared in the same manner as with the method of the (3-2-1), except for changing the amount of water of the co-solvent to be soaked into the paper wiper from 1 mL to 2 mL, and changing the treatment time by a supercritical carbon dioxide fluid from 180 minutes to 360 minutes, and the treatment of the measurement sample by a supercritical carbon dioxide fluid was performed. Then, the cotton yarn after being taken out from the jig, and being dried was weighed. The water soaked into the paper wiper was rendered in a state mixed with supercritical carbon dioxide. The volume ratio of supercritical carbon dioxide : cotton yarn was 40 : 1, and the volume ratio of supercritical carbon dioxide : water was 200 : 1.

(3-3) Cotton yarn with alkenyl succinate ester of the starch decomposed product (2) deposited thereon

A measurement sample was prepared in the same manner as with the method of (3-1-1), except for winding the cotton yarn (1) with the alkenyl succinate ester of the starch decomposed product (2) prepared in (4) of the foregoing 1., sized thereon (Example 2, the deposit rate of the adhesive: 7.1 wt% (Table 1)) (length: about 400 m, about 10 g) in place of winding the woven fabric cloth of Example obtained in the foregoing (1) [cloth with the alkenyl succinate ester of the starch decomposed product (1) deposited thereon] obtained in the foregoing 2. around the jig. The treatment of the measurement sample by a supercritical carbon dioxide fluid was performed. Then, the cotton yarn after being taken out from the jig, and being dried was weighed. The water soaked into the paper wiper was rendered in a state mixed with supercritical carbon dioxide. The volume ratio of supercritical carbon dioxide : cotton yarn was 40 : 1, and the volume ratio of supercritical carbon dioxide : water was 200 : 1.

(3-4) Cotton yarn with alkenyl succinate ester of the starch decomposed product (3) deposited thereon

A measurement sample was prepared in the same manner as with the method of (3-1-1), except for winding the cotton yarn (1) with the alkenyl succinate ester of the starch decomposed product (3) prepared in (4) of the foregoing 1., sized thereon (Example 3, the deposit rate of the adhesive: 2.9 wt% (Table 1)) (length: about 400 m, about 10 g) in place of winding the woven fabric cloth of Example obtained in the foregoing (1) [cloth with the alkenyl succinate ester of the starch decomposed product (1) deposited thereon] of 2., around the jig. The treatment of the measurement sample by a supercritical carbon dioxide fluid was performed. Then, the cotton yarn after being taken out from the jig, and being dried was weighed. The water soaked into the paper wiper was rendered in a state mixed with supercritical carbon dioxide. The volume ratio of supercritical carbon dioxide : cotton yarn was 40 : 1, and the volume ratio of supercritical carbon dioxide : water was 200 : 1.

(3-5) Cotton yarn with starch paste deposited thereon

A measurement sample was prepared in the same manner as with the method of (3-1-1), except for winding the cotton yarn (1) with the starch paste prepared in (1) [cotton yarn with starch deposited thereon] of the foregoing 2., sized thereon (corresponding to Comparative Example, the deposit rate of the adhesive: 3.8 wt%) (length: about 400 m, about 10 g) in place of winding the woven fabric cloth of Example 1 obtained in (1) of the foregoing 2., around the jig. The treatment of the measurement sample by a supercritical carbon dioxide fluid was performed. Then, the cotton yarn after being taken out from the jig, and being dried was weighed. The water soaked into the paper wiper was rendered in a state mixed with supercritical carbon dioxide. The volume ratio of supercritical carbon dioxide : cotton yarn was 45 : 1, and the volume ratio of supercritical carbon dioxide : water was 200 : 1.

(4) Evaluation

The evaluation results of the following items (4-1) and (4-2) are shown in Table 2. The sample numbers in Table 2 correspond to the items (3-1-1) to (3-5), respectively.

(4-1) Removal rate of adhesive

Using the deposit rate (%) of the adhesive of the cloths or cotton yarns with an adhesive (cloths or cotton yarns after the sizing treatment and before the desizing treatment) (cloth with an adhesive: 1.6 wt% described above, cotton yarn with an adhesive: 5.2, 7.1, 2.9, or 3.8 wt% described above), and the deposit rate (%) of the adhesive of the cloth or the cotton yarn after the desizing treatment, the removal rate (Desizing rate D) of the adhesive was calculated on the basis of the following equation (2).

[Math. 2]

$$\text{Desizing rate D (\%)} = \left[1 - \frac{\text{Deposit rate after treatment}}{\text{Deposit rate before treatment}}\right] \times 100 \qquad (2)$$

(4-2) Solubility of adhesive to supercritical carbon dioxide fluid

On the basis of the following equation (3), the solubility (g/mL) of the adhesive (the alkenyl succinate ester (1) or the starch paste) to the supercritical carbon dioxide fluid (the total of supercritical carbon dioxide and the co-solvent) was calculated.

[Math. 3]

$$\text{Solubility} = A / R \qquad (3)$$

A (g): amount of adhesive dissolved in supercritical carbon dioxide fluid (g)
R (ml): volume of supercritical carbon dioxide fluid used per unit amount (1 g) of cloth or cotton yarn with adhesive (each cloth or cotton yarn after sizing treatment and before desizing treatment) (ml); calculable from liquor ratio (weight of cloth or cotton yarn with adhesive (g) : volume of supercritical carbon dioxide fluid (ml))

[Table 2]

Table 2

| Sample No. | Adhesive used | Object to be treated | Co-solvent | Treatment time (minutes) | Solubility of adhesive to supercritical carbon dioxide fluid (g/ml) | Removal rate of adhesive (%) |
|---|---|---|---|---|---|---|
| 3-1-1 | Alkenyl succinate ester of starch decomposed product (1) | Woven cloth with adhesive deposited thereon | Water 2ml | 180 | $2.7 \times 10^{-3}$ | 78 |
| 3-1-2 | | | EGME 5ml | | $2.6 \times 10^{-3}$ | 78 |
| 3-2-1 | | Cotton yarn with adhesive deposited thereon | Water 1ml | | $5.2 \times 10^{-3}$ | 42 |
| 3-2-2 | | | Water 2ml | 360 | $6.9 \times 10^{-3}$ | 55 |
| 3-3 | Alkenyl succinate ester of starch decomposed product (2) | Cotton yarn with adhesive deposited thereon | Water 2ml | 180 | $6.8 \times 10^{-3}$ | 40 |
| 3-4 | Alkenyl succinate ester of starch decomposed product (3) | Cotton yarn with adhesive deposited thereon | Water 2ml | 180 | $7.0 \times 10^{-3}$ | 102 |
| 3-5 | Starch paste | Cotton yarn with adhesive deposited thereon | Water 2ml | 180 | $1.1 \times 10^{-3}$ | 15 |

The results of the sample Nos. 3-1-1 and 3-1-2 adopting the woven fabric cloths of Table 2 as the objects to be treated have revealed that the desizing treatment by supercritical carbon dioxide can sufficiently remove the alkenyl succinate ester of the starch decomposed product with regard to the cloth. Further, the removal rate of the adhesive did not change between the case where the co-solvent was 2 mL of water (sample No. 3-1-1) and the case of 5 mL of EGME (sample No. 3-1-2). From the result, it can be considered that use of the co-solvent of 2 mL of water that requires less addition amount is more effective prescription.

The results of the sample Nos. 3-2-1 and 3-2-2 adopting the cotton yarns of Table 2 as the objects to be treated have revealed that, with regard to the yarn, the desizing treatment by supercritical carbon dioxide can sufficiently remove the alkenyl succinate ester of the starch decomposed product. Further, it has been revealed that the removal rate of the adhesive can be increased by increasing the amount of the co-solvent to be used, and elongating the treatment time by a supercritical carbon dioxide fluid.

The sample Nos. 3-1-1 and 3-1-2 adopting the woven fabric cloths as the objects to be treated were increased in the removal rate of the adhesive as compared with the sample Nos. 3-2-1 and 3-2-2 adopting the yarns as the objects to be treated. Although not bound by any theory, this is presumed due to the facts that the state of wrapping around the jig changed between the woven fabric cloth and the yarn, and that the woven fabric cloth was more likely to come into contact with the supercritical carbon dioxide fluid.

The comparison between the results of the sample Nos. 3-2-1 and 3-2-2 and the results of the sample Nos. 3-3 and 3-4 in which the kind of the alkenyl succinate ester of the starch decomposed product has been changed has indicated as follows. Even when the kind of the alkenyl succinate ester of the starch decomposed product is changed, the alkenyl succinate ester of the starch decomposed product can be sufficiently removed by the desizing treatment by supercritical carbon dioxide.

Further, the sample No. 3-4 using the alkenyl succinate ester of the starch decomposed product (3) was particularly high in the removal rate of the adhesive. Although not bound by any theory, it can be presumed as follows. The hydrophobicity of the alkenyl group in the alkenyl succinate ester of the starch decomposed product (3) is higher. As a result, the hydrophobicity of the alkenyl succinate ester of the starch decomposed product (3) becomes higher. This facilitates desizing by a supercritical carbon dioxide fluid. Incidentally, for the sample No. 3-4, the removal rate of the adhesive exceeds 100%. This can be considered due to the fact that other components than the adhesive originally included in the cotton yarn were removed at the desizing step.

The results of the sample No. 3-5 (Comparative Example) adopting the cotton yarn with a starch paste deposited thereon of Table 2 have revealed that the starch paste cannot be sufficiently removed by the desizing treatment by supercritical carbon dioxide.

The comparison between the sample Nos. 3-2-1, 3-2-2, 3-3, and 3-4 and the sample No. 3-5 (Comparative Example) in Table 2 has revealed that the alkenyl succinate ester of the starch decomposed product shows a very high removal rate by the desizing treatment by supercritical carbon dioxide as compared with the starch paste.

The description up to this point has revealed that a fiber product with an adhesive in accordance with one aspect of the present invention is suitable for desizing using supercritical carbon dioxide.

Further, the results up to this point have revealed as follows. In addition to the fact that the fiber product with an adhesive of the present embodiment is suitable for desizing using supercritical carbon dioxide, the fiber product with an adhesive has high durability against friction, or can show high tensile strength, or can show high tensile elongation.

**Reference Signs List**

1        Chiller unit

2        $CO_2$ supply pump

3        Air vent valve

4        Check valve

5        Pressure transmitter

6        Safety valve

7        Dyeing container

8        Container drain valve

9        Container inside temperature sensor

10       Magnetic force induction type stirrer

11       Exhaust gas flow rate adjustment valve

12       Container exhaust valve

13       Control panel

14       Plug for $CO_2$ supply pump

15       Plug for dyeing container heating heater

A        $CO_2$ tank

**Claims**

1.  A fiber product with an adhesive,
    the adhesive comprising an alkenyl succinate ester of a starch decomposed product.

2.  The fiber product with an adhesive according to claim 1, wherein
    the alkenyl succinate ester of the starch decomposed product includes an octenyl succinate ester of dextrin, an octenyl succinate ester of maltose, or a dodecenyl succinate ester of maltose, or a combination thereof.

3. The fiber product with an adhesive according to claim 1 or 2, wherein
an alkenyl succinate content in the alkenyl succinate ester of the starch decomposed product is 5 to 50 wt%.

4. The fiber product with an adhesive according to claim 1 or 2, wherein
DE of a starch decomposed product that is a constituent component of the alkenyl succinate ester of the starch decomposed product is 5 to 80.

5. The fiber product with an adhesive according to claim 1 or 2, wherein
the fiber product includes a cotton yarn or a cotton cloth.

6. The fiber product with an adhesive according to claim 1 or 2, wherein
a deposit rate of the adhesive relative to an amount of the fiber product with an adhesive is 0.1 to 10 wt%.

7. An adhesive comprising an alkenyl succinate ester of a starch decomposed product, the adhesive being used for manufacturing the fiber product with an adhesive according to claim 1 or 2.

8. A method of manufacturing the fiber product with an adhesive according to claim 1 or 2, the method comprising a step of bringing a fluid including the adhesive and a fiber product into contact with each other, and performing sizing on the fiber product.

9. A method of manufacturing a fiber product from the fiber product with an adhesive according to claim 1 or 2, the method comprising a step of: bringing a fluid including supercritical carbon dioxide and the fiber product with an adhesive into contact with each other, and performing desizing of the fiber product with an adhesive.

10. The method according to claim 9, wherein
the step of performing desizing is by a batch treatment or a continuous treatment.

[Figure 1]

[Figure 2]

[Figure 3]

[Figure 4]

[Figure 5]

EP 4 624 653 A1

[Figure 6]

22

[Figure 7]

## INTERNATIONAL SEARCH REPORT

| International application No. |
|---|
| **PCT/JP2024/023050** |

### A. CLASSIFICATION OF SUBJECT MATTER

*D06M 15/11*(2006.01)i; *D06B 19/00*(2006.01)i; *D06M 13/224*(2006.01)i
FI: D06M15/11; D06B19/00 Z; D06M13/224

According to International Patent Classification (IPC) or to both national classification and IPC

### B. FIELDS SEARCHED

Minimum documentation searched (classification system followed by classification symbols)

D06M13/224; D06M15/11; D06B19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 7-166472 A (NICHIDENKAGAKU K.K) 27 June 1995 (1995-06-27) | 1-8 |
|  | paragraphs [0007], [0010]-[0011], [0020]-[0024], example 1, tables 1-2 |  |
| Y |  | 9-10 |
| Y | WO 2022/244634 A1 (IZAWA TOWEL CO., LTD.) 24 November 2022 (2022-11-24) | 9-10 |
|  | paragraphs [0002], [0005], claims 3, 10 |  |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/023050**

| Patent document cited in search report | Publication date (day/month/year) | Patent family member(s) | Publication date (day/month/year) |
|---|---|---|---|
| JP 7-166472 A | 27 June 1995 | (Family: none) | |
| WO 2022/244634 A1 | 24 November 2022 | EP 4343045 A1 paragraphs [0002], [0005], claims 3, 10 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H04273806 A